# EUROPÄISCHE PATENTSCHRIFT

(11) **EP 3 172 076 B1**
(45) Veröffentlichungstag und Bekanntmachung des Hinweises auf die Patenterteilung: **21.03.2018**
(21) Anmeldenummer: 16798386.5
(22) Anmeldetag: 06.10.2016
(51) Int. Cl.: B60K 15/04

(54) **STUTZENABSCHLUSS FÜR DEN TANKSTUTZEN EINES KRAFTFAHRZEUGS**
INLET END PIECE FOR THE TANK INLET OF A MOTOR VEHICLE
EXTRÉMITÉ D'EMBOUT POUR L'EMBOUT DE RÉSERVOIR D'UN VÉHICULE AUTOMOBILE

(30) Priorität: 08.10.2015 DE 202015105342 U
(43) Veröffentlichungstag der Anmeldung: 31.05.2017
(73) Patentinhaber: Gerdes GmbH, 50170 Kerpen (DE)
(72) Erfinder: STADELBACHER, Marc, 51399 Burscheid (DE)
(74) Vertreter: Bungartz Christophersen Partnerschaft mbB Patentanwälte
(86) Internationale Anmeldenummer: PCT/DE2016/100464
(87) Internationale Veröffentlichungsnummer: WO 2017/059844

(56) Entgegenhaltungen:
- WO-A2-2012/167062
- DE-A1-102011 111 234
- DE-A1-102013 201 896
- DE-U1-202015 105 342
- JP-A- H08 253 039

## Beschreibung

Die Erfindung betrifft einen Stutzenabschluss für den Tankstutzen eines Kraftfahrzeugs nach dem Oberbegriff des Anspruch 1.

Ein derartiger Stutzenabschluss weist zum Beispiel einen Rohrstutzen und einen, im oberen Bereich des Rohrstutzens angeordneten Verschlusseinsatz zum Verschließen des Rohrstutzens gegenüber der Umgebung auf. Der Verschlusseinsatz weist bevorzugt eine Einfüllöffnung zum Einführen des Füllrohrs einer Zapfpistole und eine, um eine Schwenkachse schwenkbare Dichtklappe auf, die insbesondere durch das Füllrohr beim Einschieben des Füllrohrs gegen die Kraft einer der Öffnungsbewegung entgegenwirkenden Schließkraft aufklappbar ist. Diese Schließkraft wird bevorzugt von einer durch das Öffnen der verschlussklappe gespannten Verschlussfeder gebildet. Im geschlossenen Zustand der Verschlussklappe hält die Schließkraft die Verschlussklappe gebildeten in Anlage an einen Anschlag, der insbesondere von einer Dichtung gebildet wird.

Ein Stutzenabschluss dieser Art ist aus der DE 10 2010 036 970 A1 bekannt. Es handelt sich hierbei um einen sogenannten deckellosen Stutzenabschluss, der einen oberen Sicherungsmechanismus gegen Fehlbetankung und die in einem Abstand hierzu angeordnete, untere Dichtklappe aufweist. Diese deckellosen Stutzenabschluss haben den Vorteil, dass sie sowohl eine Fehlbetankung eines Dieselfahrzeugs mit Otto-Kraftstoff als auch umgekehrt eine Fehlbetankung eines Fahrzeuges mit Otto-Motor mit Dieselkraftstoff verhindern können. Die Anwendbarkeit der vorliegenden Erfindung ist allerdings nicht auf diesen speziellen Aspekt oder einen deckellosen Stutzenabschluss eingeschränkt.

Dadurch, dass bei dem bekannten Stutzenabschluss die Dichtklappe im Abstand zur oberen Eintrittsklappe des Sicherungsmechanismus angeordnet ist, kann der Benutzer entweder beim Herausziehen der Zapfpistole aus dem Stutzenabschluss oder auch durch eine zu geringe Einstecktiefe eine geringe Menge von Kraftstoff in den Bereich zwischen der Dichtklappe und dem oberen Sicherungsmechanismus einfüllen. Dieser läuft dann über eine Ablaufleitung aus diesem oberen Bereich heraus. Aus DE 10 2013 201896 ist ein gattungsbildender Stutzenabschluss bekannt. Aufgabe der Erfindung ist es, den Stutzenabschluss dahingehend zu verbessern, dass der Benutzer in die Lage versetzt wird, zu erkennen, ob der von ihm eingeführte Kraftstoff tatsächlich noch durch die Dichtklappe in den Tank läuft.

Diese Aufgabe wird nach der Erfindung durch einen Stutzenabschluss nach Anspruch 1 gelöst.

Bei einer bevorzugten Ausgestaltung der Erfindung ist der Stutzenabschluss derart ausgebildet, dass er wenigstens ein, in einer Aufnahme von einer inaktiven Position in eine Signalposition hin und her beweglich gehaltenes Indikatormittel mit einem Indikatorbereich aufweist. Bei geschlossener Dichtklappe befindet das Indikatormittel dann in der inaktiven Position und ist derart in der Aufnahme angeordnet, dass der Indikatorbereich für den Benutzer nicht sichtbar ist. Durch das Einschieben des Füllrohrs bis zu einer Einstecktiefe, in der die Dichtklappe zumindest teilweise geöffnet ist, wird dann das Indikatormittel zwangsweise in die Signalposition verlagert, in der der Indikatorbereich für den Benutzer dann bevorzugt deutlich sichtbar ist.

Durch die erfindungsgemäße Ausgestaltung des Stutzenabschluss wird nun dem Benutzer über das Indikatormittel angezeigt, ob die untere Dichtklappe geöffnet ist und somit getankter Kraftstoff in den Tank hinein läuft oder durch die geschlossene Dichtklappe in dem Raum zwischen der Dichtklappe und dem oberen Verschlussmechanismus verbleibt. Generell ist die Erfindung immer dann in vorteilhafter Weise anwendbar, wenn oberhalb der dichtenden Dichtklappe ein Stutzenabschluss zur Verfügung steht, in dem sich Kraftstoff ansammeln könnte.

Insbesondere dann, wenn ein Doppelklappenmechanismus Verwendung findet, könnte der Benutzer ansonsten den Eindruck gewinnen, dass das Öffnen der oberen Klappe ausreichend ist, um das Kraftfahrzeug zu betanken. Darüber hinaus neigen viele Kraftfahrer dazu, nach dem Tanken den im Schlauch der Zapfsäule befindlichen Kraftstoff noch in den Tank laufen zu lassen. Hierbei wird jedoch oft die Zapfpistole schon zurückgezogen, so dass der Kraftstoff nur in den oberen Ringraum oberhalb der (dichtend geschlossenen) unteren Dichtklappe läuft, von dort jedoch wieder ausgeleitet wird und aus dem Tanksystem heraustropft.

Erfindungsgemäß wird nun das Indikatormittel vorgesehen, das zwangsweise beim Einschieben des Füllrohrs der Zapfpistole bis zu einer notwendigen Tiefe von der inaktiven Position in die Signalposition überführt wird. Grundsätzlich kann dies auf verschiedene Weise erfolgen. Dies kann zum Beispiel durch ein dieses Indikatormittel bildendes Bauteil geschehen, das entweder durch das Einschieben des Füllrohrs oder durch die Öffnungsbewegung der Dichtklappe gedreht oder verlagert wird, wobei durch die Bewegung des Indikatormittels der Indikatorbereich sichtbar wird.

So kann beispielsweise das Indikatormittel durch ein kleines Sichtfenster hindurch ragen, wobei es in der inaktiven Position zunächst im Wesentlichen mit dem Fenster abschließt, während es in der aktiven Signalposition nach oben aus dem Fenster herausragt. Der heraus ragende Bereich bildet dann den Indikatorbereich. Dieser kann farblich gekennzeichnet werden um dem Benutzer die Funktion zusätzlich visuell deutlich zu machen.

Eine alternative Ausgestaltung kann zum Beispiel darin bestehen, dass das Indikatormittel unterhalb des Fensters seitlich zum Fenster verschoben wird, so dass der Benutzer durch das Fenster jeweils einen andersfarbigen Bereich des Indikatormittels sehen kann. Diese Ausgestaltung wird weiter unten genauer beschrieben.

Zunächst wird eine bevorzugte Ausgestaltung der Erfindung beschrieben, bei der das Indikatormittel von einem Indikatorstift gebildet ist, der im Wesentlichen parallel zur Einschubrichtung des Füllrohrs verschiebbar im Verschlusseinsatz des Stutzenabschlusses gelagert ist. In der inaktiven Position schließt das obere Ende des Indikatorstiftes mit einem Durchlassfenster bündig ab. Mit Ausnahme eines dünnen, umlaufenden Spaltes kann der Benutzer in diesem Fall also zunächst den Indikatorstift kaum erkennen.

Der Indikatorstift wird beim Einschieben des Füllrohrs erst einmal an seiner Position bleiben und erst dann, wenn das Füllrohr den Bereich der Dichtklappe erreicht, bewegt werden. Bevorzugt geschieht dies erst nach Öffnung der Dichtklappe zumindest um einen Öffnungswinkel, der groß genug ist, um den Kraftstoff in den Stutzen laufen zu lassen.

Bei einer möglichen Ausgestaltung wird der Indikatorstift über einen Magneten an die Dichtklappe herangezogen. Dies kann entweder dadurch geschehen, dass die Dichtklappe mit einem Magneten versehen oder ihrerseits magnetisch ist oder dass der Magnet beziehungsweise der magnetische Bereich auf Seiten des Indikatorstiftes vorgesehen ist. Ein vom Magnet angezogener Widerpart, entweder in Form eines anderen, gegenpoligen Magnetes oder eines ferromagnetischen Bereiches, ist dann an dem jeweils anderen Bauteil vorgesehen.

Wird die Dichtklappe nun durch das Eindringen des Füllrohrs in den Stutzenabschluss nach unten aufgeklappt, entfernt sich der Magnet vom magnetischen Widerpart. Hierdurch lässt die Anziehungskraft zunehmend nach. Bei dieser Ausgestaltung ist gleichzeitig eine Stellfeder vorgesehen, die den Indikatorstift nach oben in die Signalposition drängt. Die Federkraft dieser Stellfeder ist geringer als die Magnetkraft bei geschlossener Dichtklappe.

Durch das Öffnen der Dichtklappe wird nun die Magnetkraft kontinuierlich verringert bis die Federkraft der Stellfeder größer ist als die Magnetkraft. Dies führt dazu, dass der Indikatorstift nach oben bewegt wird bis er an einem oberen Anschlag anschlägt und mit seinem oberen Indikatorbereich aus dem Durchlass herausragt. In diesem Fall kann der Benutzer dann den Indikatorbereich leicht wahrnehmen, insbesondere wenn er farbig markiert ist oder aus einer farbigen Umgebung hervorspringt. Dadurch, dass in dem Moment, in dem die Federkraft größer als die Magnetkraft ist, der Indikatorstift sich mit seinem magnetischen Widerpart weiter von dem Magneten entfernt, wird der Effekt weiter verstärkt und der Indikatorstift springt sprungartig in die Signalposition.

Durch die Wahl einer geeigneten Federkonstanten kann der Öffnungswinkel eingestellt werden, der erreicht werden muss, um das Wechseln der Position des Indikatorstiftes von der inaktiven Position in die Signalposition auszulösen. Dies bedeutet, dass nicht schon dann, wenn sich das Füllrohr der Zapfpistole der Verschlussklappe nähert, sondern erst dann, wenn die Verschlussklappe tatsächlich um einen geeigneten Winkel geöffnet ist, die Signalposition erreicht wird. Dies ist insbesondere dann vorteilhaft, wenn bei der umgekehrten Bewegung der Benutzer das Füllrohr wieder zurückzieht. Auch hier wird der Indikatorstift schon dann eingezogen, wenn die Dichtklappe noch nicht ganz geschlossen ist. Dies führt dazu, dass der Benutzer immer dann, wenn der Indikatorstift sich der Signalposition befindet, sicher sein kann, dass Kraftstoff, der noch aus dem Füllrohr austritt, auch in den Tank laufen kann.

Natürlich muss der Indikatorstift nicht zwangsläufig parallel zur Einschubrichtung des Füllrohrs verschiebbar sein. Wichtig ist nur die Tatsache, dass er mit einem Indikatorbereich in eine Position springen kann, die vom Benutzer wahrgenommen werden kann. Aus Platzgründen wird es allerdings bevorzugt sein, den Indikatorstift möglichst parallel zum Rohrstutzen anzuordnen. Der Indikatorstift kann dabei sowohl innerhalb des Verschlusseinsatzes als auch neben dem Verschlusseinsatz zwischen dem Rohrstutzen und dem Verschlusseinsatz separat verschiebbar gelagert sein.

Der Indikatorstift selbst kann jede mögliche Form aufweisen, insbesondere zylindrisch oder auch mit rechteckigem Querschnitt ausgebildet sein oder auch aus einer Kombination unterschiedlicher Formen bestehen. Letztlich ist ein Stift im Sinne der Funktion jedes Bauteil, das durch seine räumliche Verlagerung in der Lage ist, den Indikatorbereich für den Benutzer durch Verlagerung optisch sichtbar zu machen.

Eine weitere Möglichkeit zur Umsetzung des erfindungsgemäßen Gedankens besteht darin, dass das Indikatormittel mit der Bewegung der Dichtklappe gekoppelt wird. Dies kann zum Beispiel dadurch erreicht werden, dass die schwenkbar im Verschlusseinsatz gelagerte Dichtklappe über die Schwenkachse hinaus mit einem Stellabschnitt verlängert ist. Dieser Stellabschnitt schwenkt ist dann gegensinnig zur Dichtklappe bewegt, d.h. wenn die Dichtklappe nach unten verschwenkt wird schwenkt der Stellabschnitt dann nach oben. Ein in diesem Bereich verschiebbar gelagertes Indikatormittel kann dann mit dem Stellabschnitt zusammenwirken, so dass es von der Dichtklappe nach oben gedrückt wird. Hierzu kann es entweder über einen Hebeltrieb oder eine unmittelbare, gelenkige Verbindung mit dem Stellabschnitt verbunden sein.

So kann zum Beispiel der Stellabschnitt die Form einer Gabel aufweisen, in deren Schlitz das stiftartige Indikatormittel hineinragt. Oberhalb und unterhalb der Gabel kann das Indikatormittel dann Vorsprünge aufweisen, die zur Kraftübertragung dienen.

Eine weitere Möglichkeit der Umsetzung der Erfindung besteht darin, dass im Bereich der Verschlussklappe ein separater Hebel in den Verschiebeweg des Füllrohrs hineinragt, so dass dieser Hebel durch das eindringende Füllrohr verschwenkt wird. Der Hebel kann einen abgewinkelten Bereich aufweisen, der wiederum mit dem Indikatormittel zusammenwirkt, wobei das Verschwenken des Hebels den abgewinkelten Bereich nach oben verlagert. Das hiermit gekoppelte Indikatormittel wird ebenfalls nach oben verschoben, so dass der Indikatorbereich durch den Durchlass nach außen treten kann um dem Benutzer die Öffnung der Dichtklappe anzuzeigen.

Eine weitere, oben bereits erwähnte Möglichkeit besteht darin, dass der Indikatorbereich nicht durch den Durchlass nach außen hervortritt, sondern durch ein Sichtfenster sichtbar ist und zum Beispiel eine seitliche Verlagerung des Indikatormittels dem Benutzer den Öffnungszustand der Dichtklappe anzeigt. So kann beispielsweise das eindringende Füllrohr oder die nach unten schwenkende Dichtklappe ein im Rohrstutzen angeordnetes Indikatormittel seitlich verdrängen, wobei dieses Indikatormittel längst des Rohrstutzens nach oben geführt ist und oben zum Beispiel um 90° abgewinkelt ist. Dieser abgewinkelte Bereich liegt bei dieser Ausgestaltung unter dem Sichtfenster und ist zum Beispiel in der inaktiven Position mit einem roten Teilbereich unter dem Sichtfenster angeordnet.

Wird nun das Füllrohr in den Rohrstutzen eingesteckt, gelangt es bei einer bestimmten Eindringtiefe, mit der die Öffnung der Dichtklappe einhergeht, in seitlichen Kontakt mit dem Indikatormittel und verdrängt dieses seitlich. Hierdurch wird der nach oben geführte Bereich des Indikator mittels ebenfalls seitlich verlagert und der rote Bereich wird zugunsten eines benachbarten, z.B. grün gefärbten Bereiches verschoben. Der Benutzer kann dann durch das Sichtfenster den grünen Teil des Indikatormittels erkennen, der ihm die hinreichende Eindringtiefe anzeigt.

Bei entsprechender Ausbildung der Tankstelle, insbesondere der Pumpensteuerung der Zapfsäule und der Zapfpistole, kann die Verlagerung des Indikatormittels auch zur Aktivierung der Pumpe genutzt werden. Hierzu weist beispielsweise die Zapfpistole einen unteren Drucktaster auf, der von dem hervorstehenden Indikatorbereich beim Einstecken der Zapfpistole bestätigt wird. Erst nachdem der Indikatorbereich den Indikatorbereich mit einem Schaltdruck beaufschlagt hat, wird dann die Pumpe aktiviert, so dass sichergestellt ist, dass die Verschlussklappe geöffnet ist.

Schließlich kann die Bewegung des Indikatormittels auch ein akustisches oder ein vom dem Stutzenabschluss entfernt angeordnetes optische Signal auslösen. So kann das Indikatormittel als Schaltelement genutzt werden, dass dieses Signal bei Erreichen der inaktiven und/oder der Signalposition auslöst. Dies kann alternativ zum Sichtbarwerden des Indikatorbereichs oder in Ergänzung zu dieser Position geschehen. Ein akustisches Signal kann beispielsweise eine kurze Betätigung der Hupe des Kraftfahrzeugs sein, so wie es von Alarmanlagen bekannt ist. Eine optische Anzeige kann das kurze Aufblinken der Fahrrichtungsanzeiger sein. Auch eine Kontrollleuchte im Innenraum kann ununterbrochen den geschlossenen Zustand der Dichtklappe oder auch den (außerhalb des Tankens dann fehlerbedingten) geöffneten Zustand anzeigen. In diesem Fall kann die Funktion des Fahrzeugs auch über eine Wegfahrsperre stillgelegt oder eingeschränkt werden.

Die oben beschriebenen Ausführungsformen stellen Beispiele dar, die den erfindungsgemäßen Grundgedanken umsetzen, ohne dass der Schutz der vorliegenden Anmeldung hierauf eingeschränkt sein soll. Die Unteransprüche betreffen vorteilhafte Ausgestaltungen der Erfindung, wobei die einzelnen Merkmale der Unteransprüche auch unabhängig von den angegebenen Rückbezügen in jeder Kombination, auch als Gegenstand der vorliegenden Erfindung angesehen werden.

Weitere Merkmale und Vorteile der Erfindung ergeben sich der nachfolgenden Beschreibung eines bevorzugten Ausführungsbeispiels anhand der Zeichnungen.

In den Zeichnungen zeigt:
- Fig. 1: eine dreidimensionale Darstellung eines Verschlusseinsatzes eines erfindungsgemäßen Stutzenabschluss und
- Fig. 2: den in Figur 1 dargestellten Verschlusseinsatz in einer Schnittansicht.

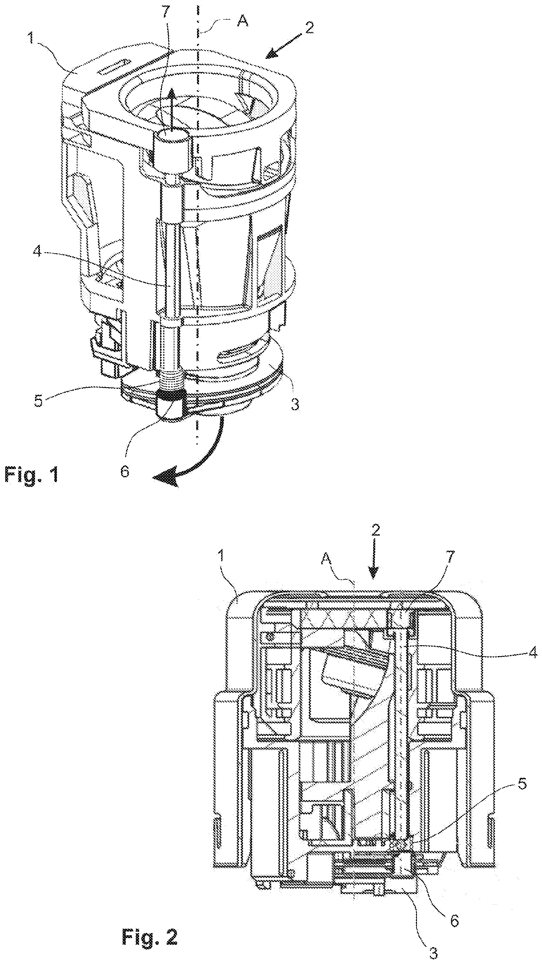

In Figur 1 ist eine bevorzugte Ausgestaltung der Erfindung dargestellt. Nicht dargestellt ist hier der äußere Rohrstutzen, Figur 1 zeigt zur besseren Erkennbarkeit der wesentlichen Details nur den Verschlusseinsatz 1. Figur 2 zeigt den Verschlusseinsatz 1 in einer Seitenansicht im Schnitt.

Dieser Verschlusseinsatz 1 wird in den oberen Teil eines Rohrstutzens zum Betanken des Tanks eines Kraftfahrzeugs eingesetzt. Im unteren Bereich weist der Verschlusseinsatz die eigentliche Dichtklappe 3 auf, die gegen die Kraft einer hier nicht sichtbaren Rückstellfeder in Pfeilrichtung durch das längs der Stutzenachse A des Rohrstutzens eingeschobene Füllrohr einer Zapfpistole geöffnet werden kann.

Im Bereich der Einfüllöffnung 2 ist eine obere Klappe vorgesehen, deren Funktion für die Erfindung nicht wesentlich ist. Bevorzugt ist diese obere Klappe nur durch das Füllrohr einer Zapfpistole zur Abgabe von geeignetem Kraftstoff zu öffnen. Diese, für die vorliegende Erfindung nicht wesentliche Funktion ist beispielsweise in der DE 10 2010 036 970 A1 ausführlich beschrieben, deren Inhalt durch diesen Verweis ausdrücklich Inhalt der vorliegenden Beschreibung sein soll.

Im vorderen Bereich weist der Verschlusseinsatz 1 einen Indikatorstift 4 auf. Der Indikatorstift 4 ist hier an zwei Stellen, in deren Bereich er zylindrisch ausgebildet ist, verschiebbar und parallel zur Stutzenachse A des Rohrstutzens gelagert. Im unteren Bereich ist eine Stellfeder 5 vorgesehen, die den Indikatorstift 4 nach oben drängt. Das obere Ende des Indikatorstiftes 4 ist als Indikatorbereich 7 ausgebildet und in der gezeigten inaktiven Position in einer runden Aufnahme in der oberen Fläche des Verschlusseinsatzes 1 aufgenommen. Von oben sieht also der Benutzer nur die Oberseite des Indikatorbereiches 7.

An der Dichtklappe 3 ist ein Magnet 6 vorgesehen. Dieser Magnet 6 ist im Abstand zur Schwenkachse der Dichtklappe 3 angeordnet, so dass er zusammen mit der Dichtklappe 3 bei Eindringen eines Füllrohres einer Zapfpistole nach unten verschwenkt wird. Das untere Ende des Indikatorstiftes 4 ist derart ausgebildet, dass es mit dem Magneten 6 dahingehend zusammenwirkt, dass der Magnet 6 den Indikatorstift 4 anzuziehen vermag.

Im gezeigten Ausführungsbeispiel ist der Indikatorstift 4 im oberen, den Indikatorbereich 7 bildenden Bereich verdickt und wird hier von einer ringförmigen Aufnahme des oberen Teils des Verschlusseinsatzes 1 aufgenommen. Die ringförmige Aufnahme untergreift mit einem Absatz diesen verdickten Bereich und bildet so einen unteren Anschlag, so dass der Indikatorstift 4 nicht weiter nach unten verschoben werden kann.

Wird nun die Dichtklappe 3 nach unten in Pfeilrichtung aufgestoßen, kann aufgrund des unteren Anschlages der Indikatorstift 4 nicht von der Magnetkraft nach unten gezogen werden. Stattdessen wird der Magnet 6 zunehmend vom magnetischen Bereich des Indikatorstiftes 4 entfernt, wodurch die Anziehungskraft des Magneten 6 zunehmend nachlässt.

Bei einem bestimmten Öffnungswinkel übersteigt nun die Kraft der Stellfeder 5, die den Indikatorstift 4 nach oben zu drücken versucht, die Magnetkraft. In diesem Moment drückt die Stellfeder 5 den Indikatorstift 4 nach oben, so dass der Indikatorbereich 7 aus der Aufnahme herausragt und für den Benutzer erkennbar ist. Bevorzugt ist die äußere Mantelfläche des verdickten oberen Bereiches mit einer signifikanten Signalfarbe versehen, so dass das Hervorstehen des Indikatorbereiches 7 aus der Aufnahme optisch besonders auffällt.

Die Ausgestaltung mit dem Magneten 6 und der, der Magnetkraft entgegen gerichteten Kraft der Stellfeder 5 hat den besonderen Vorteil, dass der Indikatorbereich 7 nicht schon bei der ersten Bewegung der Dichtklappe 3 nach oben bewegt wird, sondern erst nach Erreichen eines bestimmten Öffnungswinkel, bei dem nach Durchschreiten eines Kräftegleichgewicht zwischen Magnetkraft und Federkraft die Federkraft überwiegt, sprungartig nach oben schnellt. Hierdurch ist sichergestellt, dass bei aus der Aufnahme herausragenden Indikatorbereich 7 die Dichtklappe 3 geöffnet ist und Kraftstoff durch die geöffnete Dichtklappe 3 in den Tank hinein laufen kann.

Es kann also nicht sein, dass der Benutzer durch langsames Herausziehen des Füllrohres einen Zustand herstellt, bei dem der Indikatorbereich 7 zwar noch oben aus der Aufnahme herausragt, andererseits aber die Dichtklappe 3 schon geschlossen ist. Dies wäre gerade ein kritischer Bereich, bei dem zum Beispiel versucht werden könnte, im Schlauch der Zapfsäule befindliches Benzin noch in den Tank hinein laufen zu lassen.

Zieht der Benutzer nun das Füllrohr längs der Stutzenachse A aus dem Verschlusseinsatz heraus nähert sich der Magnet 6 wieder dem Indikatorstift 4 an. Bei Erreichen eines bestimmten Schließwinkels wird die Magnetkraft wieder die Federkraft der Stellfeder 5 überschreiten und den Indikatorstift 4 wieder nach unten ziehen. Dieser Schließwinkel, der zum Bewegen des Indikatorstiftes 4 in die inaktive Position notwendig ist, wird etwas kleiner sein, als die für die Bewegung des Indikatorstiftes 4 entgegengesetzte Richtung notwendige Öffnungsbewegung. Dies liegt daran, dass beim Schließen der Indikatorstift 4 um den Weg verlagert ist, der ihn von der inaktiven Position in die Signalposition geführt hat. Um diese Wegstrecke muss nun der Magnet 6 zusätzlich auf die Schließposition zu bewegt werden, um die zum Überwinden der Federkraft notwendige Magnetkraft zu erreichen.

Bevorzugt sind die Kräfte der Stellfeder 5 sowie des Magneten 6 so aufeinander abgestimmt, dass auch beim Schließen der Indikatorstift 4 schon in die inaktive Stellung verlagert ist, bevor die Verschlussklappe 3 geschlossen ist. Dies gibt nicht nur dem Benutzer die Gelegenheit für die bereits beschriebene nach Betankung durch Leerlaufenlassen des Schlauches der Zapfsäule, sondern stellt auch ausreichend Zeit zur Verfügung, die im Zwischenraum zwischen der oberen Klappe und der unteren Dichtklappe 3 befindliche Kraftstoffmenge ablaufen zu lassen.

### Bezugszeichenliste:

- 1: Verschlusseinsatz
- 2: Einfüllöffnung
- 3: Dichtklappe
- 4: Indikatorstift
- 5: Stellfeder
- 6: Magnet
- 7: Indikatorbereich

- A: Achse des Rohrstutzens

## Patentansprüche

1. Stutzenabschluss für den Tankstutzen eines Kraftfahrzeugs mit einem Rohrstutzen und mit einem, im oberen Bereich des Rohrstutzens angeordneten Verschlusseinsatz (1), der eine Einfüllöffnung (2) für eine Zapfpistole und eine, um eine Schwenkachse schwenkbare Dichtklappe (3) aufweist, die von einer der Öffnungsbewegung entgegen wirkenden Schließkraft im geschlossenen Zustand gehalten und durch Einschieben der Zapfpistole aufklappbar ist, **dadurch gekennzeichnet, dass**
der Stutzenabschluss wenigstens ein Indikatormittel mit einem Indikatorbereich (7) aufweist, dass derart ausgebildet und beweglich gelagert ist, dass sich das Indikatormittel bei geschlossener Dichtklappe (3) in einer inaktiven Position befindet, in der der Indikatorbereich (7) für den Benutzer nicht sichtbar ist, und bei zumindest teilweise geöffneter Dichtklappe (3) das Indikatormittel zwangsweise in eine Signalposition verlagert ist, in der der Indikatorbereich (7) für den Benutzer sichtbar ist.

2. Stutzenabschluss für den Tankstutzen eines Kraftfahrzeugs nach Anspruch 1, **dadurch gekennzeichnet, dass** der Stutzenabschluss eine Aufnahme für das Indikatormittel aufweist und das Indikatormittel derart in der Aufnahme von der inaktiven Position in die Signalposition hin und her beweglich gelagert ist, dass das Indikatormittel durch das Einschieben des Füllrohrs bis zu einer Einstecktiefe, in der die Dichtklappe (3) zumindest teilweise geöffnet ist, zwangsweise verlagert ist, so dass in der inaktiven Position zuvor für den Benutzer verdeckte Indikatorbereich (7) sichtbar wird, wobei bei geschlossener Dichtklappe (3) der Indikatorbereich (7) mit einem oberen Ende aus einer oberen Ebene des Verschlusseinsatzes (1) herausragt.

3. Stutzenabschluss für den Tankstutzen eines Kraftfahrzeugs nach einem der beiden vorhergehenden Ansprüche, **dadurch gekennzeichnet, dass** er ein Stellmittel, insbesondere in Form einer Stellfeder (5), aufweist, das das Indikatormittel bei geöffneter Dichtklappe (3) derart verlagert, dass der Indikatorbereich (7) für den Benutzer sichtbar ist.

4. Stutzenabschluss für den Tankstutzen eines Kraftfahrzeugs nach einem der vorhergehenden Ansprüche, **dadurch gekennzeichnet, dass** das Indikatormittel ein Indikatorstift (4) mit wenigstens abschnittsweise rundem, ovalem oder rechteckigen Querschnitt ist.

5. Stutzenabschluss für den Tankstutzen eines Kraftfahrzeugs nach Anspruch 4, **dadurch gekennzeichnet, dass** der Indikatorstift (4) längs der Achse (A) des Rohrstutzens zwischen einem oberen Anschlag und einem unteren Anschlag in der Aufnahme verschiebbar gelagert ist, wobei die Aufnahme zur Lagerung des Indikatorstiftes (4) im oder am Verschlusseinsatz (1) angeordnet ist.

6. Stutzenabschluss für den Tankstutzen eines Kraftfahrzeugs nach dem vorhergehenden Anspruch, **dadurch gekennzeichnet, dass** der Indikatorstift (4) bei geschlossener Dichtklappe (3) von der Dichtklappe (3) in Anlage an den unteren Anschlag gehalten ist.

7. Stutzenabschluss für den Tankstutzen eines Kraftfahrzeugs nach Anspruch 3 oder einem der Ansprüche 4 bis 6, jeweils zurückbezogen auf Anspruch 3, **dadurch gekennzeichnet, dass** das Stellmittel von der Stellfeder (5) und einer Magnetpaarung aus zumindest einem Magneten (6) und einem hier von angezogenen Widerpart gebildet ist, wobei der angezogene Widerpart von dem unteren Ende des Indikatorstiftes (4) gebildet ist und die Magnetpaarung den Indikatorstift (4) in Richtung der Dichtklappe (3) und des unteren Anschlags zieht und die Stellfeder (5) derart angeordnet und eingerichtet ist, dass sie eine der Kraft des Magneten (6) entgegen gerichtete Kraft auf den Indikatorstift (4) aufzubringen vermag, die derart bemessen ist, dass bei schließender Dichtklappe (3) die Kraft der Stellfeder (5) durch die Kraft des Magneten (6) überwunden und der Indikatorstift (4) soweit nach unten in Richtung des unteren Anschlags gezogen ist, dass der Indikatorbereich (7) für den Benutzer nicht mehr sichtbar ist.

8. Stutzenabschluss für den Tankstutzen eines Kraftfahrzeugs nach dem vorhergehenden Anspruch, **dadurch gekennzeichnet, dass** der Magnet (6) an einem, der Schwenkachse abgewandten Bereich, insbesondere im Bereich des abgewandten Randes der Dichtklappe (3), angeordnet ist und das untere Ende des Indikatorstiftes (4) wenigstens abschnittsweise einen ferromagnetischen Stoff beinhaltet.

9. Stutzenabschluss für den Tankstutzen eines Kraftfahrzeugs nach Anspruch 8, **dadurch gekennzeichnet, dass** der ferromagnetische Widerpart am unteren Ende des Indikatorstiftes (4) von der am unteren Ende des Indikatorstiftes (4) angeordneten, metallischen Stellfeder (5) gebildet ist.

10. Stutzenabschluss für den Tankstutzen eines Kraftfahrzeugs nach Anspruch 7, **dadurch gekennzeichnet, dass** die Dichtklappe (3) wenigstens abschnittsweise einen ferromagnetisch ausgebildet ist und um eine Schwenkachse schwenkbar ist, wobei der Magnet (6) an einem, der Schwenkachse abgewandten Bereich, insbesondere im Endbereich des Indikatorstiftes (4) angeordnet ist und der Indikatorstift (4) längs einer Achse beweglich ist, die im Abstand zur Schwenkachse der Dichtklappe (3) angeordnet ist, insbesondere durch, der Schwenkachse gegenüberliegenden Randbereich der Dichtklappe (3) Randbereich der geschlossenen Dichtklappe (3) verläuft.

11. Stutzenabschluss für den Tankstutzen eines Kraftfahrzeugs nach einem der Ansprüche 4 bis 10, **dadurch gekennzeichnet, dass** der Indikatorbereich (7) vom oberen Ende des verschiebbar gelagerten Indikatorstiftes (4) gebildet ist, wobei die Aufnahme und die Lagerung des Indikatorstiftes (4) derart ausgebildet sind, dass der Indikatorbereich (7) in der inaktiven Position von der Aufnahme abgedeckt und nicht sichtbar ist.

12. Stutzenabschluss für den Tankstutzen eines Kraftfahrzeugs nach einem der Ansprüche 3 bis 6, **dadurch gekennzeichnet, dass** die Dichtklappe (3) einen über die Schwenkachse hinausragenden Stellabschnitt aufweist, wobei der Indikatorstift (4) angrenzend an den Bewegungsbereich des Stellabschnittes verschiebbar gelagert ist und derart mit dem Stellabschnitt zusammenwirkt, dass der Stellabschnitt den Indikatorstift (4) von der inaktiven Position in die Signalposition zu verlagern vermag.

13. Stutzenabschluss für den Tankstutzen eines Kraftfahrzeugs nach Anspruch 12, **dadurch gekennzeichnet, dass** der Stellabschnitt mit einem während der Schwenkbewegung der Dichtklappe (3) bewegten Rand zwischen zwei, von Vorsprüngen am Indikatorstift (4) oder einer Nut im Indikatorstift (4) gebildeten Widerlager ragt.

14. Stutzenabschluss für den Tankstutzen eines Kraftfahrzeugs nach Anspruch 3, **dadurch gekennzeichnet, dass** das Stellmittel von einem im Verschlusseinsatz (1) gelagerten Stellhebel gebildet ist, der mit einem ersten Bereich im Bewegungsbereich der Dichtklappe (3) oder des Füllrohrs im räumlichen Bereich des Passierens der Dichtklappe (3) angeordnet ist und derart beweglich gelagert ist, dass er mit einem abgewinkelten zweiten Bereich an einer Lagerung am Indikatorstift (4) anliegt.

15. Stutzenabschluss für den Tankstutzen eines Kraftfahrzeugs nach einem der beiden vorhergehenden Ansprüche, **dadurch gekennzeichnet, dass** der Indikatorstift (4) gegen die Kraft einer Rückstellfeder in die Signalposition verschiebbar gelagert ist.

## Claims

1. Nozzle closure for the tank nozzle of a motor vehicle with a pipe nozzle and with a closure insert (1) arranged in the upper area of the pipe nozzle, which has a filler opening (2) for a pump nozzle and a sealing flap (3) pivotable around a pivot axis, which is held by a closure force acting against the opening movement in the closed condition and can be opened by pushing in the pump nozzle, **characterised in that** the nozzle closure has at least one indicator means with an indicator area (7) designed and moveably mounted in such a way that the indicator means is located in an inactive position, in which the indicator area (7) is not visible for the user, when the sealing flap (3) is closed, and where the indicator means is of necessity displaced into a signal position in which the indicator area (7) is visible for the user when the sealing flap (3) is at least partially open.

2. Nozzle closure for the tank nozzle of a motor vehicle according to claim 1, **characterised in that** the nozzle closure has a take-up for the indicator means and the indicator means is mounted to move reciprocally in the take-up from the inactive position to the signal position, that the indicator means is of necessity displaced by pushing the filler pipe in as far as an insertion depth in which the sealing flap (3) is at least partially open, so that the indicator area (7) that was previously hidden from the user in the inactive position becomes visible, wherein the indicator area (7) projects from an upper level of the closure insert (1) with an upper end when the sealing flap (3) is closed.

3. Nozzle closure for the tank nozzle of a motor vehicle according to one of the two preceding claims, **characterised in that** it has a setting means, in particular in the form of a setting spring (5), which displaces the indicator means when the sealing flap (3) is open in such a way that the indicator area (7) is visible for the user.

4. Nozzle closure for the tank nozzle of a motor vehicle according to one of the preceding claims, **characterised in that** the indicator means is an indicator pin (4) with an at least sectionally rounded, oval or rectangular cross-section.

5. Nozzle closure for the tank nozzle of a motor vehicle according to claim 4, **characterised in that** the indicator pin (4) is mounted displaceably moveable along axis (A) of the pipe nozzle between an upper shoulder and a lower shoulder in the take-up, wherein the take-up is arranged in or on the closure insert (1) for receiving the indicator pin (4).

6. Nozzle closure for the tank nozzle of a motor vehicle according to the preceding claim, **characterised in that** the indicator pin (4) is held against the lower shoulder by the sealing flap (3) when the sealing flap (3) is closed.

7. Nozzle closure for the tank nozzle of a motor vehicle according to claim 3 or one of the claims 4 to 6, each referring back to claim 3, **characterised in that** the setting means is formed by the setting spring (5) and a magnet pairing of at least one magnet (6) and a counterpart attracted by the same, wherein the attracted counterpart is formed by the lower end of the indicator pin (4) and the magnet pairing pulls the indicator pin (4) in the direction of the sealing flap (3) and the lower shoulder, and the setting spring (5) is arranged and set up in such a way that it can apply a force to the indicator pin (4) that opposes the force of the magnet (6) and is sized in such a way that the force of the setting spring (5) is overcome by the force of the magnet (6) when the sealing flap (3) closes, and the indicator pin (4) is pulled so far down in the direction of the lower shoulder that the indicator area (7) is no longer visible for the user.

8. Nozzle closure for the tank nozzle of a motor vehicle according to the preceding claim, **characterised in that** the magnet (6) is arranged on an area facing away from the pivot axis, in particular in the area of the non-facing edge of the sealing flap (3), and the lower end of the indicator pin (4) includes at least one sectionally ferro-magnetic pin.

9. Nozzle closure for the tank nozzle of a motor vehicle according to claim 8, **characterised in that** the ferro-magnetic counterpart is formed on the lower end of the indicator pin (4) by the metallic setting spring (5) arranged at the lower end of the indicator pin (4).

10. Nozzle closure for the tank nozzle of a motor vehicle according to claim 7, **characterised in that** the sealing flap (3) is at least sectionally designed to be ferro-magnetic and can be pivoted around a pivot axis, wherein the magnet (6) is arranged on an area facing away from the pivot axis, in particular in the end area of the indicator pin (4), and the indicator pin (4) can be moved along an axis arranged at a distance from the pivot axis of the sealing flap (3), in particular extending through the edge area of the sealing flap (3) lying opposite the edge area of the closed sealing flap (3).

11. Nozzle closure for the tank nozzle of a motor vehicle according to one of the claims 4 to 10, **characterised in that** the indicator area (7) is formed by the upper end of the displaceably mounted indicator pin (4), wherein the take-up and the bearing of the indicator pin (4) are designed in such a way that the indicator area (7) is covered in the inactive position and is not visible.

12. Nozzle closure for the tank nozzle of a motor vehicle according to one of the claims 3 to 6, **characterised in that** the sealing flap (3) has a setting section that protrudes further than the pivot axis, wherein the indicator pin (4) is displaceably mounted adjacent to the movement area of the setting section and cooperates with the setting section in such a way that the setting section can displace the indicator pin (4) from the inactive position into the signal position.

13. Nozzle closure for the tank nozzle of a motor vehicle according to claim 12, **characterised in that** the setting section projects between two counter bearings formed by protrusions on the indicator pin (4) or a groove in the indicator pin (4) with an edge that moves during the pivot movement of the sealing flap (3).

14. Nozzle closure for the tank nozzle of a motor vehicle according to claim 3, **characterised in that** the setting means is formed by a setting lever mounted in the closure insert (1), which is arranged in the movement area of the sealing flap (3) with a first section, or in the spatial area with the filler pipe when passing the sealing flap (3), and is moveably mounted in such a way that it lies against a bearing on the indicator pin (4) with an angled second section.

15. Nozzle closure for the tank nozzle of a motor vehicle according to one of the two preceding claims, **characterised in that** the indicator pin (4) is mounted to be displaceable against the force of a return spring.

## Revendications

1. Extrémité d'embout pour l'embout de réservoir d'un véhicule automobile comportant un embout de tube et un insert de fermeture (1) disposé dans une partie supérieure de l'embout de tube, insert qui présente une ouverture de remplissage (2) pour un pistolet et un clapet d'étanchéité (3), pivotant autour d'un axe de pivotement, clapet qui est maintenu à l'état fermé par une force de fermeture opposée au mouvement d'ouverture et qui peut être rabattu en insérant le pistolet, **caractérisée en ce que**
l'extrémité d'embout présente au moins un moyen d'indication muni d'une zone d'indication (7), le moyen étant formé et logé mobile de telle manière que, lorsque le clapet d'étanchéité (3) est fermé, le moyen d'indication se trouve dans une position inactive dans laquelle la zone d'indication (7) n'est pas visible pour l'utilisateur et, lors d'une ouverture au moins partielle du clapet d'étanchéité (3), le moyen d'indication est déplacé par une force dans une position de signalement dans laquelle la zone d'indication (7) est visible pour l'utilisateur.

2. Extrémité d'embout pour l'embout de réservoir d'un véhicule automobile selon la revendication 1, **caractérisée en ce que** l'extrémité d'embout présente un logement pour le moyen d'indication et le moyen d'indication est logé mobile dans le logement de telle sorte qu'il va et vient de la position inactive à la position de signalement, que le moyen d'indication est déplacé par une force en insérant le tube de remplissage jusqu'à une profondeur d'insertion dans laquelle le clapet d'étanchéité (3) est ouvert au moins partiellement de sorte que la zone d'indication (7) jusqu'alors cachée pour l'utilisateur en position inactive devienne visible, la zone d'indication (7) dépassant d'un niveau supérieur de l'insert de fermeture (1) avec une extrémité supérieure lorsque le clapet d'étanchéité (3) est fermé.

3. Extrémité d'embout pour l'embout de réservoir d'un véhicule automobile selon l'une quelconque des deux revendications précédentes, **caractérisée en ce qu'**elle présente un moyen de réglage, notamment sous la forme d'un ressort de réglage (5), qui déplace le moyen d'indication lorsque le clapet d'étanchéité (3) est ouvert de telle sorte que la zone d'indication (7) est visible pour l'utilisateur.

4. Extrémité d'embout pour l'embout de réservoir d'un véhicule automobile selon l'une quelconque des revendications précédentes, **caractérisée en ce que** le moyen d'indication est un crayon indicateur (4) avec une section ronde, ovale ou carrée au moins par segments.

5. Extrémité d'embout pour l'embout de réservoir d'un véhicule automobile selon la revendication 4, **caractérisée en ce que** le crayon indicateur (4) est logé de façon coulissante dans le logement le long de l'axe (A) de l'embout de tube entre une butée supérieure et une butée inférieure, le logement étant disposé dans ou sur l'insert de fermeture (1) pour fixer le crayon indicateur (4).

6. Extrémité d'embout pour l'embout de réservoir d'un véhicule automobile selon la revendication précédente, **caractérisée en ce que** le crayon indicateur (4) est maintenu en appui sur la butée inférieure par le clapet d'étanchéité (3) lorsque le clapet d'étanchéité (3) est fermé.

7. Extrémité d'embout pour l'embout de réservoir d'un véhicule automobile selon la revendication 3 ou selon l'une quelconque des revendications 4 à 6, se rapportant respectivement à la revendication 3, **caractérisée en ce que** le moyen de réglage est formé du ressort de réglage (5) et d'une paire d'aimants, constituée d'au moins un aimant (6) et d'un élément antagoniste attiré par ceci, ledit élément antagoniste attiré étant formé de l'extrémité inférieure du crayon indicateur (4) et la paire d'aimants tirant le crayon indicateur (4) dans le sens du clapet d'étanchéité (3) et de la butée inférieure et, le ressort de réglage (5) étant conçu et disposé de telle sorte qu'il exerce sur le crayon indicateur (4) une force opposée à la force de l'aimant (6) et qui est telle que la force du ressort de réglage (5) est franchie par la force de l'aimant (6) lorsque le clapet d'étanchéité (3) se ferme et le crayon indicateur (4) est tiré vers le bas en direction de la butée inférieure jusqu'à ce que la zone d'indication (7) ne soit plus visible pour l'utilisateur.

8. Extrémité d'embout pour l'embout de réservoir d'un véhicule automobile selon la revendication précédente, **caractérisée en ce que** l'aimant (6) est disposé au niveau d'une zone opposée à l'axe de pivotement, notamment dans la zone du bord opposé du clapet d'étanchéité (3), et l'extrémité inférieure du crayon indicateur (4) contient au moins par segments un matériau ferromagnétique.

9. Extrémité d'embout pour l'embout de réservoir d'un véhicule automobile selon la revendication 8, **caractérisée en ce que** l'élément antagoniste ferromagnétique est formé à l'extrémité inférieure du crayon indicateur (4) du ressort de réglage (5) métallique disposé au niveau de l'extrémité inférieure du crayon indicateur (4).

10. Extrémité d'embout pour l'embout de réservoir d'un véhicule automobile selon la revendication 7, **caractérisée en ce que** le clapet d'étanchéité (3) est constitué au moins par segments d'un matériau ferromagnétique et pivote autour d'un axe de pivotement, l'aimant (6) étant disposé au niveau d'une zone opposée à l'axe de pivotement, notamment dans la zone d'extrémité du crayon indicateur (4), et le crayon indicateur (4) étant mobile le long d'un axe qui se trouve à distance de l'axe de pivotement du clapet d'étanchéité (3), notamment **en ce que** la zone de bordure opposée à l'axe de pivotement du clapet d'étanchéité (3) suit la zone de bordure du clapet d'étanchéité (3) fermé.

11. Extrémité d'embout pour l'embout de réservoir d'un véhicule automobile selon l'une quelconque des revendications 4 à 10, **caractérisée en ce que** la zone d'indication (7) est formée de l'extrémité supérieure du crayon indicateur (4) logé coulissant, le logement et la fixation du crayon indicateur (4) étant constitués de telle sorte que la zone d'indication (7) est recouverte par le logement et invisible en position inactive.

12. Extrémité d'embout pour l'embout de réservoir d'un véhicule automobile selon l'une quelconque des revendications 3 à 6, **caractérisée en ce que** le clapet d'étanchéité (3) présente une partie de réglage dépassant l'axe de pivotement, le crayon indicateur (4) étant logé coulissant adjacent à la zone de mouvement de la partie de réglage et agissant avec la partie de réglage de telle sorte que la partie de réglage déplace le crayon indicateur (4) de la position inactive vers la position de signalement.

13. Extrémité d'embout pour l'embout de réservoir d'un véhicule automobile selon la revendication 12, **caractérisée en ce que** la partie de réglage dépasse avec un bord, se déplaçant pendant le pivotement du clapet d'étanchéité (3), entre deux butées formées de saillies sur le crayon indicateur (4) ou d'une rainure dans le crayon indicateur (4).

14. Extrémité d'embout pour l'embout de réservoir d'un véhicule automobile selon la revendication 3, **caractérisée en ce que** le moyen de réglage est formé d'un levier de réglage logé dans l'insert de fermeture (1), levier qui est disposé avec une première zone dans la zone de mouvement du clapet d'étanchéité (3) ou du tube de remplissage dans l'espace de passage du clapet d'étanchéité (3) et logé mobile de telle sorte qu'il vient en appui avec une deuxième zone angulaire sur un logement sur le crayon indicateur (4).

15. Extrémité d'embout pour l'embout de réservoir d'un véhicule automobile selon l'une quelconque des deux revendications précédentes, **caractérisée en ce que** le crayon indicateur (4) est logé coulissant en position de signalement contre la force d'un ressort de rappel.
